# EUROPEAN PATENT APPLICATION

(11) **EP 3 489 060 A1**
(43) Date of publication of application: **29.05.2019**
(21) Application number: 18207182.9
(22) Date of filing: 20.11.2018
(51) Int. Cl.: B60K 11/04

(54) **FARM TRACTOR**

(30) Priority: 22.11.2017 IT 201700133960
(71) Applicant: Pierre Trattori S.n.c. di Giovanni Battista Polentes & C., 15060 Silvano d'Orba (Alessandria) (IT)
(72) Inventor: POLENTES, Giovanni Battista, I-15060 SILVANO D'ORBA (Alessandria) (IT)
(74) Representative: Lunati & Mazzoni S.r.L.

(57) **Abstract**

A farm tractor (1) for an orchard or vineyard defining a longitudinal axis (1a) and a front axle (1b) comprising an engine (2) cantilevered with respect to the front axle (1b) and defining an extreme forward position (2a) with respect to the front axle (1b) along the longitudinal axis (1a), cooling means (3) suitable to cool the engine (2) and including at least one radiator (4) in fluidic through connection and adjacent to the engine (2) so as to allow heat exchange between the engine (2) and the radiator (4), and at least one fan (5) suitable to direct a flow of air drawn from the outside towards the radiator (4), in which the cooling means (3) are not arranged beyond the extreme forward position (2a) along the longitudinal axis (1a) starting from the front axle (1b).

## Description

The present invention relates to a farm tractor of the type as recited in the preamble of Claim 1.

In particular, the present invention relates to a farm tractor of the type commonly used in vineyards and orchards.

As is known, for crops and care of portions of land including vineyards or orchards, high-mobility small agricultural vehicles are provided.

These vehicles are mainly narrow-track farm tractors able to work on steep or impervious territories which can normally be travelled on by crawler vehicles.

These tractors are small/medium in size and have small diameter wheels. These tractors are very often of an isodiametric type and, as the term itself suggests, provide a configuration in which the wheels are defined by the same dimensions, unlike common tractors which have smaller diameters in the front area.

The prior art described above has some notable drawbacks.

In particular, isodiametric tractors allow for greater manoeuvrability without the use of crawler vehicles, but they are not compact enough to allow fast and simplified manoeuvres.

This problem is even more evident, for example, in particular areas such as the headland where the tractor typically performs manoeuvres for changing direction in order to change row.

In this context, the technical task underlying the present invention is to devise a farm tractor capable of substantially obviating at least some of the above-mentioned drawbacks.

In the context of this technical task, it is an important aim of the invention to obtain a farm tractor that makes it possible to facilitate manoeuvring on steep or non-steep terrains, and in particular in impervious areas such as those already mentioned and used for changing direction.

Another important aim of the invention is to provide a farm tractor that allows to increase the working speed within orchards or vineyards.

The technical task and specified aims are achieved with a farm tractor as claimed in the appended Claim 1.

Preferred technical solutions are set forth in the dependent claims.

The features and advantages of the invention will be apparent from the following detailed description of preferred embodiments thereof, with reference to the accompanying drawings, in which:
**Fig. 1** is a side view of a farm tractor according to the invention in a first configuration;
**Fig. 2** is a side view of a farm tractor according to the invention in a second configuration;
**Fig. 3** is a side view of a farm tractor according to the invention in a third configuration;

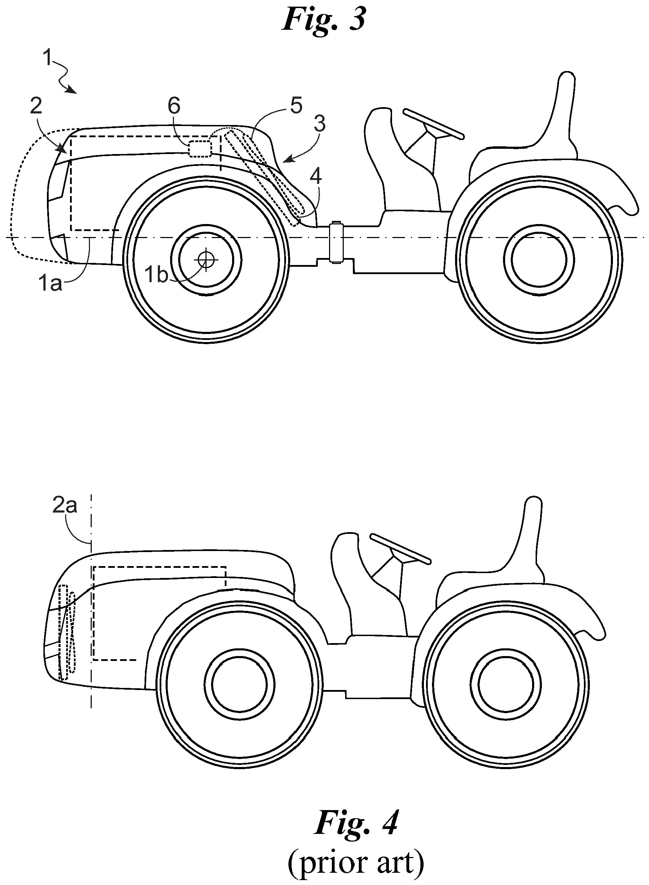

**Fig. 4** is a side view of a farm tractor according to the current state of the art. Herein, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, these terms, if associated with a value, preferably indicate a divergence of not more than 10% from said value.

Furthermore, when used, terms such as "first", "second", "higher", "lower", "main" and "secondary" do not necessarily identify an order, a priority relationship or a relative position, but can simply be used to distinguish more clearly the different components from each other.

Unless otherwise indicated, the measurements and data provided in this document are to be considered using International Standard Atmosphere ICAO (ISO 2533). With reference to the Figures, reference numeral **1** globally denotes the farm tractor according to the invention.

The farm tractor 1 is preferably a small/medium sized tractor, more appropriately it is a tractor for a vineyard or orchard.

These types of tractors are known from the current state of the art as nonconventional tractors whose characteristics, for example, lie in the fact that they are small/medium-sized tractors defining a height of less than 2.5 m, a width of less than 1.6 m, a wheelbase of less than 2.3 m and steering with angles between 50° and 70° in such a way as to be able to manoeuvre easily within narrow spaces such as orchard and vineyard corridors.

Furthermore, the farm tractor 1 is preferably, although not necessarily, of an isodiametric type. Therefore, it comprises wheels of substantially identical diameter for the head and tail wheels, typically two respectively, and is used primarily for the processing of rough and steep terrains such as, for example, vineyards and/or orchards.

Therefore, the tractor 1 defines one longitudinal axis **1a** and at least two axles. The longitudinal axis 1a is the main extension axis of the tractor 1 and corresponds substantially to the travel axis of the vehicle.

It should preferably coincide with the axis of symmetry of the tractor 1 itself.

The axles, as known, are the apparatuses that join the wheels symmetrically arranged with respect to the longitudinal axis 1a.

Therefore, the tractor 1 comprises at least one front axle **1b** and one rear axle. The front axle 1b is defined by the line joining the front wheels, i.e. arranged at the front in relation to the longitudinal axis and the direction of travel of the tractor 1. The rear axle is defined by the line joining the rear wheels.

Both axles can be perpendicular to the longitudinal axis or can be rotated on command.

Preferably the front axle 1b is suitable to be rotated in the plane defined by the longitudinal axis 1a and the front axle 1b by means of elements such as, for example, a steering wheel.

The tractor 1 also comprises an engine **2** and cooling means **3.**

The engine 2 is of a known type, e.g. in-line four-cylinder KDI 2504 TCR or DEUTZ TCD 3.6 L04 Kohler engine.

The engine 2 is preferably arranged, according to an already known configuration, cantilevered with respect to the front axle 1b.

Therefore, it is preferably in a forward position with respect to the front wheels. The engine 2, therefore, defines an extreme forward position **2a.**

This extreme forward position 2a is evaluated with respect to the front axle 1b along the longitudinal axis 1a. In particular, it defines the longitudinal space occupied by the engine 2 within the tractor 1 and corresponds to the ultimate forward limit of occupation of the engine 2.

Preferably, the tractor 1 does not extend beyond the extreme forward position 2a. In fact, the cooling means 3 are preferably not arranged beyond the extreme forward position 2a along the longitudinal axis 1a starting from the front axle 1b.

The cooling means 3 comprise at least one radiator **4** and at least one fan **5.**

The radiator 4 is preferably in a fluidic through connection with the engine 2. In addition, it is preferably adjacent to the latter so as to allow a heat exchange between the engine 2 and the radiator 4.

The radiator 4 can be of the known type, for example a coil radiator with microchannels, suitable to cool the liquid passing through the hydraulic circuit.

The fan 5 is preferably suitable to direct an air flow drawn from the outside towards the radiator 4.

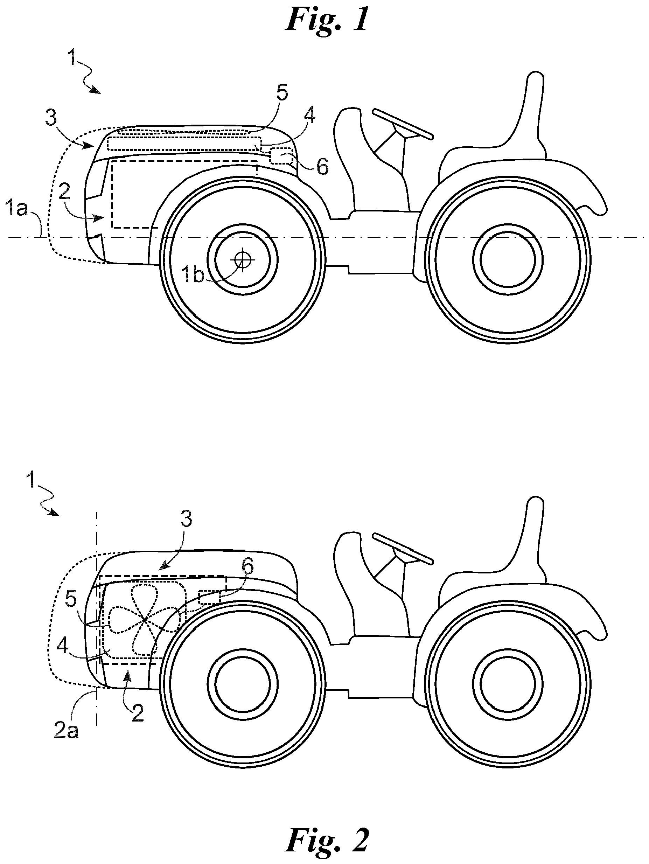

In particular, the radiator 4 and the fan 5 can have different configurations. In a first configuration, shown in Fig. 1, preferably the radiator 4 is arranged above the engine 2 with respect to the ground.

In addition, the fan 5 is arranged on the radiator 4 in such a way as to push the air drawn from the outside towards the radiator 4. Therefore, the fan 5 sucks in air from an area opposite to the ground.

In a second configuration, the radiator 4 is arranged laterally to the engine 2 with respect to the longitudinal axis 1a. The fan 5 is then arranged laterally to the radiator 4 along the side which is not occupied by the engine 2 so as to push the air drawn from the outside towards radiator 4.

In a third configuration, the radiator is located behind the engine 2 with respect to the longitudinal axis 1a. The fan 5, in this case, is preferably arranged above the radiator 4 with respect to the ground so as to push the air drawn from the outside towards the radiator 4.

In addition, the tractor 1 comprises alternative power supply means **6.**

Preferably, the fan 5 is not operationally connected to a drive shaft of the engine 2, but it is operationally connected to the alternative power supply means 6. Common tractors usually comprise at least one fan arranged between the engine and the radiator, which is suitable to suck in the outside air. This fan is arranged in that position as it uses the rotation of a drive shaft coming from the engine itself. The fan 5, on the other hand, is independent of the engine 2 by means of the alternative power supply means 6.

In addition, the fan 5 can be optionally rotated to move the air flow drawn from the outside towards the radiator 4, or it can be rotated in the opposite direction so as to move the air flow from the radiator 4 to the outside to allow the radiator 4 to be cleaned.

Preferably, the alternative power supply means 6 comprise a second engine independent of the engine 2 and suitable to supply power to the fan 5.

Alternative power supply means 6 are preferably suitable to supply mechanical power to the fan 5. This power can also undergo changes.

Preferably, in fact, said second engine is optionally any motor of hydraulic or electric type.

The operation of the tractor 1 described above in structural terms is similar to the operation of tractors of the known type, i.e. in which the radiator and the fan cooperate to cool the engine.

The farm tractor 1 according to the invention achieves some important advantages. In fact, the farm tractor allows to shorten considerably, typically from 2 dm to 3.5 dm, the front size defined by the engine-cooling means compartment.

This shortening ensures greater manoeuvrability of the tractor 1 and allows more complex steering manoeuvres.

In addition, a greater speed is ensured as the trajectories are reduced.

The positioning of the radiator according to the configurations stated in the description is not obvious to a person skilled in the art.

The arrangement of the front radiator is in fact a standard practice in the field of agricultural and non-agricultural motor vehicles. This configuration is used because it allows the fan to be placed in mechanical connection with the engine and, moreover, it allows part of the relative wind that is generated during the movement to be channelled towards the radiator itself.

However, surprisingly, this configuration does not take into account the fact that, for agricultural vehicles, the arrangement of the radiator in a front portion can lead to the suction of dirty air.

This air is mixed with soil and grass or foliage that can literally clog the radiator.

In addition, the fan itself almost always works at maximum speed since no transmission states are provided. A transmission system would require more space. Therefore, common tractors are affected by a sort of "vacuum cleaner effect" that tends to increase the wear of the engine compartment.

In addition, farm tractors are not usually concerned by high top speeds. Therefore, the advantages of conventional configurations are eliminated and the disadvantages outweigh considerably.

In the light of the above, therefore, the farm tractor 1 allows surprisingly to increase the service life of the engine-cooling means compartment at low cost and with low energy consumption.

In fact, the activation of the fan does not require high energy supplies.

Secondly, but not least, the fan 5 is free to suck in air along directions that do not coincide with the advance movement.

Therefore, it sucks in clean air and the vacuum cleaner effect that occurs in conventional vehicles is reduced, if not completely eliminated.

In particular, the first configuration is extremely advantageous in all respects.

The invention is subject to variations without departing from the scope of the inventive concept as defined in the claims.

In this context, all details are replaceable by equivalent elements, and the materials, shapes and dimensions may be any materials, shapes and dimensions.

## Claims

1. A farm tractor (1) for orchard or vineyard defining a longitudinal axis (1a) and a front axle (1b) comprising:
- an engine (2) cantilevered from said front axle (1b) and defining an extreme forward position (2a) with respect to said front axle (1b) along said longitudinal axis (1a),
- cooling means (3) suitable to cool said engine (2) and including:
- at least one radiator (4) in fluidic through connection and adjacent to said engine (2) in such a way as to allow a heat exchange between said engine (2) and said radiator (4), and
- at least one fan (5) suitable to direct an air flow drawn from the outside towards said radiator (4),
and said farm tractor (1) being **characterised in that** said cooling means (3) are not arranged beyond said extreme forward position (2a) along said longitudinal axis (1a) starting from said front axle (1b) corresponding to the ultimate forward limit of occupation of said engine (2).

2. The farm tractor (1) according to claim 1, in which said farm tractor (1) is of the isodiametric type.

3. The farm tractor (1) according to at least one preceding claim, comprising alternative power supply means (6) and in which said fan (5) is not operationally connected to a drive shaft of said engine (2) and is operationally connected to said alternative power supply means (6).

4. The farm tractor (1) according to at least one preceding claim, in which said alternative power supply means (6) comprise a second engine independent of said engine (2) and suitable to supply power to said fan (5).

5. The farm tractor (1) according to at least one preceding claim, in which said second engine is chosen between a hydraulic and electric motor.

6. The farm tractor (1) according to at least one preceding claim, in which in a first configuration said radiator (4) is placed above said engine (2) in relation to the ground and said fan (5) is placed on said radiator (4) in such a way as to push said air taken from the outside towards said radiator (4).

7. The farm tractor (1) according to at least one preceding claim, in which in a second configuration said radiator (4) is arranged laterally to said engine (2) with respect to said longitudinal axis (1a) and said fan (5) is arranged laterally to said radiator (4) along the side which is not occupied by said engine (2) in such a way as to push said air drawn from the outside towards said radiator (4).

8. The farm tractor (1) according to at least one preceding claim, in which in a third configuration said radiator (4) is arranged behind said engine (2) with respect to said longitudinal axis (1a) and said fan (5) is arranged above said radiator (4) with respect to the ground, in such a way as to push said air drawn from the outside towards said radiator (4).

9. The farm tractor (1) according to at least one preceding claim, in which said fan (5) optionally rotates in such a way as to move said air drawn from the outside towards said radiator (4), or in the opposite direction in such a way as to move said air drawn from said radiator (4) towards the outside in order to allow the cleaning of said radiator (4).

10. The farm tractor (1) according to at least one preceding claim, in which said farm tractor (1) is an unconventional tractor of small/medium dimensions defining a height of less than 2.5 m, a width of less than 1.6 m, a wheelbase of less than 2.3 m and steering with angles between 50° and 70°.
